# EUROPEAN PATENT APPLICATION

(11) **EP 4 672 019 A1**
(43) Date of publication of application: **31.12.2025**
(21) Application number: 24769692.5
(22) Date of filing: 05.02.2024
(51) Int. Cl.: G06F 16/22

(54) **DATA MANAGEMENT METHOD AND COMPUTING DEVICE**

(30) Priority: 15.03.2023 CN 202310250921
(71) Applicant: Huawei Cloud Computing Technologies Co., Ltd., Guiyang, Guizhou 550025 (CN)
(72) Inventor: CAO, Xin, Guiyang, Guizhou 550025 (CN); YUAN, Tong, Guiyang, Guizhou 550025 (CN); WANG, Hao, Guiyang, Guizhou 550025 (CN)
(74) Representative: Isarpatent
(86) International application number: PCT/CN2024/075888
(87) International publication number: WO 2024/187996

(57) **Abstract**

Embodiments of this application relate to the field of data management, and provide a data management method and a computing device. The method includes: obtaining first data, where the first data includes N fields, and N is a positive integer greater than 1; generating a feature character string according to a partitioning strategy, where the partitioning strategy indicates M fields used to generate the feature character string in the N fields and an arrangement sequence of the M fields, and M is a positive integer less than N; determining a hash value of the first data based on the feature character string; and writing all or a part of the fields of the first data into a first hash partition of a database based on the hash value of the first data, where the database includes a plurality of hash partitions. In the foregoing method, partitions into which data is to be written are distinguished based on field features of the to-be-written data, so that data with a same feature in specific fields is clustered and stored. In this way, a large quantity of unrelated partitions can be quickly filtered out during data query, to improve queryability of the stored data.

## Description

This application claims priority to Chinese Patent Application No. 202310250921.2, filed with the China National Intellectual Property Administration on March 15, 2023 and entitled "DATA MANAGEMENT METHOD AND COMPUTING DEVICE", which is incorporated herein by reference in its entirety.

### TECHNICAL FIELD

Embodiments of this application relate to the field of data management, and more specifically, to a data management method and a computing device.

### BACKGROUND

With continuous maturation of internet technologies, various industries gradually become information-based, and a large amount of data that needs to be recorded is generated every time, for example, data recording a device status or real-time data of service information. The data is continuously generated and needs to be continuously recorded, so that the data can be queried for when required, for calculation and analysis.

However, due to a large data amount, a manner of querying for the data by traversing a database is slow, and a large quantity of read and write performance resources need to be occupied. Consequently, it is difficult to meet a requirement for quickly querying for the data in real time. Therefore, how to store the data so that the data can be quickly queried for becomes an urgent technical problem to be resolved.

### SUMMARY

Embodiments of this application provide a data management method and a computing device, to distinguish, based on field features of to-be-written data, between partitions into which the data is to be written, so that data with a same feature in specific fields is clustered and stored, and a large quantity of unrelated partitions can be quickly filtered out during data query, to improve queryability of the stored data.

According to a first aspect, a data management method is provided, including: obtaining first data, where the first data includes N fields, and N is a positive integer greater than 1; generating a feature character string according to a partitioning strategy, where the partitioning strategy indicates M fields used to generate a feature character string in the N fields and an arrangement sequence of the M fields, and M is a positive integer less than N; determining a hash value of the first data based on the feature character string; and writing all or a part of the fields of the first data into a first hash partition of a database based on the hash value of the first data, where the database includes a plurality of hash partitions, different hash partitions correspond to different hash values, and the first hash partition is a hash partition corresponding to the hash value of the first data.

Specifically, the feature character string includes the M fields, and an arrangement sequence of the M fields in the feature character string is the same as an arrangement sequence indicated by the partitioning strategy.

Optionally, the first data may be time series data.

According to the technical solution provided in this application, data is clustered and stored based on an eigenvalue of a field, so that data with a same feature in specific fields can be clustered and stored in a same hash partition. Therefore, during data query, a large amount of data stored in a hash partition unrelated to a query condition can be quickly filtered out, and a capability of quickly querying for stored data is improved.

With reference to the first aspect, in some implementations of the first aspect, the M fields and the arrangement sequence of the M fields are determined based on query frequencies of the N fields.

According to the foregoing technical solution, based on query frequencies of the fields, specific fields are selected as feature fields used for hash partitioning and an arrangement sequence of the feature fields is determined, so that a hash partitioning mode matches a range of a possible query condition as much as possible, to improve validity of data filtering based on the hash partition, and further improve the capability of quickly querying for the stored data.

With reference to the first aspect, in some implementations of the first aspect, the method further includes: obtaining query frequencies of the N fields in a target time period; and updating the partitioning strategy based on the query frequencies of the N fields in the target time period.

According to the foregoing technical solution, a hash partitioning strategy is adjusted based on a query frequency that is of the field and that is fed back in real time, so that the hash partitioning strategy is more time-effective, and a hash partitioning mode of newly written data can better meet a query requirement of a field, to implement dynamic hash partitioning and further improve the capability of quickly querying for the stored data.

With reference to the first aspect, in some implementations of the first aspect, when the first data is time series data, the N fields include at least one time field, at least one constant field, and at least one variable field, and the M fields are all or a part of the at least one constant field.

According to the foregoing technical solution, a constant field that does not change with time is used as a feature field used to determine a hash partition, so that data stored in a same hash partition is more likely to have a same feature field value, to improve effect of clustering and storage of data.

With reference to the first aspect, in some implementations of the first aspect, the database further includes a constant data table, and the method further includes: determining an identifier value of the first data based on all constant fields of the first data, where the identifier value of the first data is different from an identifier value of second data, the second data is data stored in the database, and a value of a constant field of the second data is different from a value of a constant field of the first data; and storing a mapping relationship between the identifier value of the first data and all the constant fields of the first data in the constant data table.

According to the foregoing technical solution, constant fields with relatively high repetition degrees and corresponding identifier values are stored as an auxiliary table, so that a value of a constant field can be filtered during data query, to save storage space and improve data query efficiency.

With reference to the first aspect, in some implementations of the first aspect, determining the identifier value of the first data based on all the constant fields of the first data includes: determining the identifier value of the first data based on all the constant fields of the first data and the hash value of the first data, where the identifier value of the first data is different from an identifier value of third data, a hash value of the third data is different from the hash value of the first data, and the hash value of the first data can be determined based on the identifier value of the first data.

According to the foregoing technical solution, different identifier values are allocated to data in different hash partitions, so that a hash partition to which data belongs can be reversely deduced based on an identifier value, and a hash value of the data does not need to be additionally stored, to further save storage space. In addition, only data in the current hash partition needs to be considered for allocating the identifier value, to improve data storage efficiency.

With reference to the first aspect, in some implementations of the first aspect, writing all or the part of the fields of the first data into the first hash partition of the database includes: writing the at least one time field and the at least one variable field of the first data into the first hash partition. The method further includes: writing the identifier value of the first data into the first hash partition.

According to the foregoing technical solution, on a basis of storing the constant fields with the relatively high repetition degrees and the corresponding identifier values as the auxiliary table, identifier values of integer numbers are stored in the primary database storing data, to replace a large quantity of repeated constant fields, so as to reduce space required for storing data.

With reference to the first aspect, in some implementations of the first aspect, the method further includes: obtaining a query condition, where the query condition is used to query for fourth data in the database; determining at least one second hash partition based on the query condition, where the at least one second hash partition is a hash partition in which the fourth data may be stored; and determining the fourth data in the at least one second hash partition based on the query condition.

According to the technical solution provided in this application, a hash partition in which target data may be stored is filtered out based on the query condition, so that a large quantity of hash partitions that do not meet the query condition and in which data is clustered and stored can be removed through pruning, to reduce an amount of to-be-queried data, and improve data query efficiency.

With reference to the first aspect, in some implementations of the first aspect, the query condition includes a constant filter condition, where the constant filter condition indicates values of all or a value of a part of constant fields of the fourth data. Determining the at least one second hash partition based on the query condition includes: querying the constant data table based on the values of all or the value of the part of the constant fields of the fourth data, to determine an identifier value of the fourth data; and determining a hash value of the fourth data based on the identifier value of the fourth data.

According to the foregoing technical solution, a value range of a constant field is first filtered in an auxiliary table storing a mapping relationship between a constant field and an identifier value, and then a hash partition is screened, based on a corresponding identifier value, in a primary database storing data, so that time required for retrieving a large amount of repeated constant data can be reduced, to improve data query efficiency.

With reference to the first aspect, in some implementations of the first aspect, determining the fourth data in the at least one second hash partition based on the query condition includes: determining the fourth data in the at least one second hash partition based on the identifier value of the fourth data.

According to the foregoing technical solution, when the identifier value of the target data is determined, data can be further filtered in the determined hash partition based on the identifier value, so that data that is in the hash partition and that does not meet the query condition is removed through pruning.

With reference to the first aspect, in some implementations of the first aspect, the query condition includes a variable filter condition and/or a time filter condition, the variable filter condition indicates a value of a variable field of the fourth data, and the time filter condition indicates a value of a time field of the fourth data. Determining the fourth data in the at least one second hash partition based on the identifier value of the fourth data includes: determining at least one piece of candidate data in the at least one second hash partition based on the identifier value of the fourth data; and determining the fourth data from the at least one piece of candidate data based on the value of the variable field of the fourth data and/or the value of the variable field of the fourth data.

According to the foregoing technical solution, when the target data cannot be completely obtained through filtering based on the identifier value, data can be further screened out in the determined hash partition based on a query condition for another field other than the constant field in the query condition, so that data that is in the hash partition and that does not meet the query condition is further removed through pruning.

With reference to the first aspect, in some implementations of the first aspect, when the query condition includes the value of the part of the constant fields of the fourth data, the method further includes: reading a post-read constant field of the fourth data from the constant data table based on the identifier value of the fourth data, where the post-read constant field is a constant field that is not included in the query condition.

According to the foregoing technical solution, after query data that meets a condition is determined, a value of a post-read column in the constant field is read, based on the identifier value, from the auxiliary table that has a smaller data amount and that is easier to read, so that reading efficiency of the target data can be improved, and read/write performance resources of a data storage system can be saved.

According to a second aspect, a computing device for data management is provided, including: a data obtaining module, configured to obtain first data, where the first data includes N fields, and N is a positive integer greater than 1; a dynamic index module, configured to generate a feature character string according to a partitioning strategy, where the partitioning strategy indicates M fields used to generate the feature character string in the N fields and an arrangement sequence of the M fields, and M is a positive integer less than N; a partitioning module, configured to determine a hash value of the first data based on the feature character string; and a storage module, configured to write all or a part of the fields of the first data into a first hash partition of a database based on the hash value of the first data, where the database includes a plurality of hash partitions, different hash partitions correspond to different hash values, and the first hash partition is a hash partition corresponding to the hash value of the first data.

With reference to the second aspect, in some implementations of the second aspect, the M fields and the arrangement sequence of the M fields are determined based on query frequencies of the N fields.

With reference to the second aspect, in some implementations of the second aspect, the dynamic index module is further configured to: obtain query frequencies of the N fields in a target time period; and update the partitioning strategy based on the query frequencies of the N fields in the target time period.

With reference to the second aspect, in some implementations of the second aspect, the N fields include at least one time field, at least one constant field, and at least one variable field, and the M fields are all or a part of the at least one constant field.

With reference to the second aspect, in some implementations of the second aspect, the database further includes a constant data table, and the storage module is further configured to: determine an identifier value of the first data based on all constant fields of the first data, where the identifier value of the first data is different from an identifier value of second data, the second data is data stored in the database, and a value of a constant field of the second data is different from a value of a constant field of the first data; and store a mapping relationship between the identifier value of the first data and all the constant fields of the first data in the constant data table.

With reference to the second aspect, in some implementations of the second aspect, the storage module is configured to determine the identifier value of the first data based on all the constant fields of the first data and the hash value of the first data, where the identifier value of the first data is different from an identifier value of third data, a hash value of the third data is different from the hash value of the first data, and the hash value of the first data can be determined based on the identifier value of the first data.

With reference to the second aspect, in some implementations of the second aspect, the storage module is configured to: write at least one time field and at least one variable field of the first data into the first hash partition; and write the identifier value of the first data into the first hash partition.

With reference to the second aspect, in some implementations of the second aspect, the computing device further includes: a condition obtaining module, configured to obtain a query condition, where the query condition is used to query for fourth data in the database; a first query module, configured to determine at least one second hash partition based on the query condition, where the at least one second hash partition is a hash partition in which the fourth data may be stored; and a second query module, configured to determine the fourth data in the at least one second hash partition based on the query condition.

With reference to the second aspect, in some implementations of the second aspect, the query condition includes values of all or a value of a part of constant fields of the fourth data. The first query module is configured to: query the constant data table based on the values of all or the value of the part of the constant fields of the fourth data, to determine an identifier value of the fourth data; and determine a hash value of the fourth data based on the identifier value of the fourth data.

With reference to the second aspect, in some implementations of the second aspect, the second query module is configured to determine the fourth data in the at least one second hash partition based on the identifier value of the fourth data.

With reference to the second aspect, in some implementations of the second aspect, the query condition further includes a value of a variable field of the fourth data and/or a value of a time field of the fourth data. The second query module is configured to: determine at least one piece of candidate data in the at least one second hash partition based on the identifier value of the fourth data; and determine the fourth data from the at least one piece of candidate data based on the value of the variable field of the fourth data and/or the value of the variable field of the fourth data.

With reference to the second aspect, in some implementations of the second aspect, when the query condition includes the value of the part of the constant fields of the fourth data, the second query module is further configured to read a post-read constant field of the fourth data from the constant data table based on the identifier value of the fourth data, where the post-read constant field is a constant field that is not included in the query condition.

According to a third aspect, a computing device is provided, including a processor and a memory. The memory is configured to store instructions, and the processor is configured to invoke the instructions from the memory and run the instructions, so that the computing device performs the method according to any one of the first aspect or the possible implementations of the first aspect.

According to a fourth aspect, a computing device cluster is provided, including at least one computing device. Each computing device includes a processor and a memory. The memory is configured to store instructions, and the processor is configured to invoke the instructions from the memory and run the instructions, so that the computing device cluster performs the method according to any one of the first aspect or the possible implementations of the first aspect.

Optionally, the processor may be a general-purpose processor, and may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a fifth aspect, a chip is provided. The chip obtains instructions and executes the instructions to implement the method according to any one of the first aspect or the possible implementations of the first aspect.

Optionally, in an implementation, the chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect.

According to a sixth aspect, a computer program product including instructions is provided. When the instructions are run by a computing device cluster, the computing device cluster is enabled to perform the method according to any one of the first aspect or the possible implementations of the first aspect.

According to a seventh aspect, a computer-readable storage medium is provided, including computer program instructions. When the computer instructions are executed by a computing device cluster, the computing device cluster performs the method according to any one of the first aspect or the possible implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a nonvolatile storage medium.

### BRIEF DESCRIPTION OF DRAWINGS

FIG. 1 is a diagram of a column-based storage compression unit according to an embodiment of this application;
FIG. 2 is a diagram of a compression unit descriptor table according to an embodiment of this application;
FIG. 3 is a diagram of a cloud system used in the cloud field according to an embodiment of this application;
FIG. 4 is a schematic block flowchart of a data management method according to an embodiment of this application;
FIG. 5 is a diagram of a process of allocating an identifier value according to an embodiment of this application;
FIG. 6 is a diagram of a hybrid row-column storage structure according to an embodiment of this application;
FIG. 7 is a schematic block flowchart of another data management method according to an embodiment of this application;
FIG. 8 is a diagram of a process of querying for data in a hybrid row-column storage database according to an embodiment of this application;
FIG. 9 is a block diagram of a structure of a computing device for data management according to an embodiment of this application;
FIG. 10 is a block diagram of a structure of another computing device for data management according to an embodiment of this application;
FIG. 11 is a block diagram of a structure of a computing device according to an embodiment of this application;
FIG. 12 is a block diagram of a structure of a computing device cluster according to an embodiment of this application; and
FIG. 13 is a block diagram of a structure of another computing device cluster according to an embodiment of this application.

### DESCRIPTION OF EMBODIMENTS

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

For ease of understanding, the following first describes related terms and concepts that may be used in embodiments of this application.
1. Internet of things (internet of things, IoT): The internet of things is an internet of interconnected things, a network extended and expanded based on the internet, and a huge network formed by combining various information sensing devices with the network, to implement interconnections between people, machines, and things anytime and anywhere. The IoT is to use various apparatuses and technologies such as various information sensors, radio frequency identification technologies, global positioning systems, infrared sensors, and laser scanners to collect, in real time, any object or process that needs to be monitored, connected, or interacted, and collect various required information such as acoustic, optical, thermal, electrical, mechanical, chemical, biological, and location information, of the object or the process, implement ubiquitous connections between objects and between objects and people through various kinds of possible network access, and implement intelligent sensing, identification, and management of the object and the process.
2. Application Performance Monitoring (application performance management, APM): APM is to monitor a performance status of an application to determine whether expected user experience and performance indicators are achieved. APM is used to learn about a running status of the application in real time through collection, aggregation, analysis, and presentation of real-time data, to implement full-stack performance monitoring and end-to-end full-link tracing and diagnosis, help operation and maintenance personnel detect performance bottlenecks and exceptions in a system, and provide high-quality user experience.
3. Time series data: The time series data is used to describe a change status of information in various dimensions of an object over time. The time series data may be generated by a plurality of different individuals, and the individuals include different attributes, which may include an attribute that reflects only a difference between the individuals and is irrelevant to a status change of an individual, or may include an attribute that reflects a status change of an individual. Fields of the time series data are classified into three types based on features of the time series data:
   (1) time field: the time field indicates a timestamp of a data sampling moment, and may also be referred to as a time column of the data;
   (2) constant field: the constant field is a field representing a source of a data source or inherent attribute information, a value of this field is stable, and is related to only an individual difference, and the field does not change with a change of the time field, and is also referred to as a tag column of the data; and
   (3) variable field: the variable field is a field representing a data sampling dimension, changes with the change of the time field, and may also be referred to as a field column of the data.
4. Row-based storage (row-based storage) and column-based storage (column-based storage): row-based storage and column-based storage are two mainstream storage modes of distributed databases. Row-based storage is the same as a storage mode of a conventional relational database. Data is stored by row, and all fields of a piece of data are stored in each row. Therefore, when a specific field of data is queried for, all fields of the data need to be read, resulting in a slow query speed and high resource usage.

In column-based storage, data is stored by column, and a field of data corresponding to each column is separately stored in a storage unit. Therefore, when a specific field of data is queried for, only a column corresponding to the specific field needs to be read, and another column does not need to be read. This reduces unnecessary read and write resource occupation and improves query efficiency. In addition, because a same field is stored in each column, data features are similar, and compression is suitable, so that column-based storage has a higher compression ratio than row-based storage.

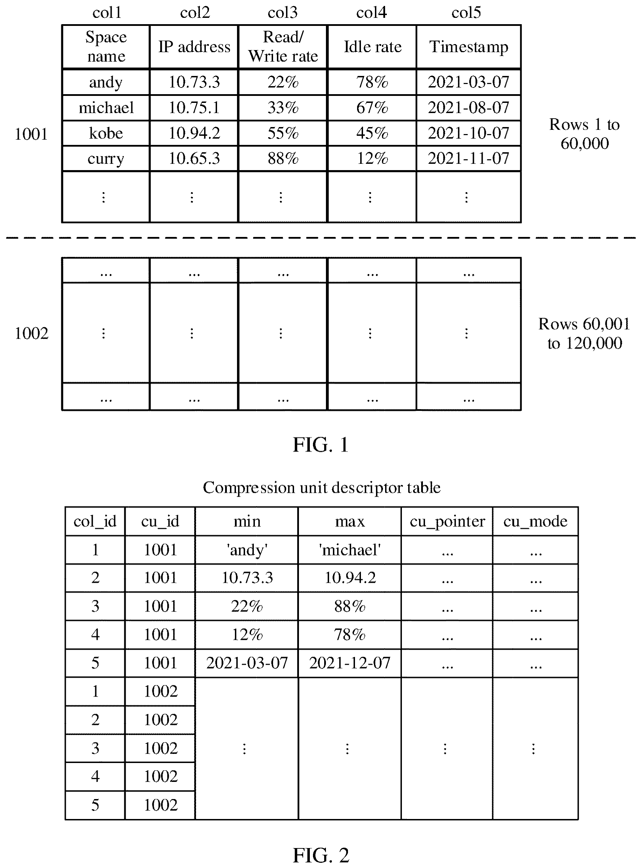

A basic storage unit of column-based storage is a compression unit (compression unit, CU), namely, a compressed data module including a part of columns in a table. FIG. 1 is a diagram of a column-based storage compression unit. As shown in FIG. 1, 60,000 pieces of data in each field correspond to one CU, and each CU is distinguished based on a field column corresponding to the CU and a row interval in which the CU is located. For example, data of rows 1 to 60,000 of a "Space name" field is stored in one CU, coll indicates a number of a field column corresponding to the CU, and 1001 indicates a number of a row interval corresponding to the CU.

To manage CUs in a column-based storage database, a column-based storage engine uses a compression unit descriptor (compression unit descriptor, CUDesc) table to record basic information of the CUs. FIG. 2 is a diagram of a compression unit descriptor table. As shown in FIG. 2, each CU corresponds to data in a row in the CUDesc table, and the data includes but is not limited to the following content:
(1) column number (col_id) and row interval number (cu_id): col_id indicates a number of a column corresponding to a number of a field column corresponding to the CU, for example, coll to col5 in the example shown in FIG. 1 correspond to 1 to 5 of col_id, cu_id indicates a number of a row interval corresponding to the CU, for example, 1001 and 1002 in the example shown in FIG. 1, and a location of the CU in a column-based storage data table can be located based on col_id and cu_id;
(2) minimum value (min) and maximum value (max): min and max respectively indicate a minimum value and a maximum value of all data in the CU, and on a basis of min and max, when specific data in CUs is not decompressed and read, a CU in which target data may be located may be filtered based on a value range of a query field;
(3) pointer (cu_pointer): cu_pointer indicates a pointer location in the CU; and
(4) compression mode (cu_mode): cu_mode indicates a data compression mode of the CU.

When column-based storage data is queried for, corresponding CU data information can be accessed by accessing a record of the CUDesc.

With continuous maturation of internet technologies, various industries gradually become information-based, and an amount of data generated increases accordingly, for example, data recording a device status in the IoT field, real-time data recording service information in the APM field, and the like. A large amount of the data is generated and recorded at any time. In addition, a real-time query capability is required to provide a basis for helping customers with device monitoring, service analysis and prediction, and fault diagnosis.

A manner of querying for the data by traversing a database is slow, and a large quantity of read and write performance resources need to be occupied. Consequently, it is difficult to meet a requirement for quickly querying for the data in real time. Changing a data storage mode from row-based storage to column-based storage can improve a data query speed. However, due to a large data amount, even if only data in a column corresponding to a specific field needs to be read, a large quantity of CUs need to be decompressed and accessed, and service scenarios such as IoT or APM in which massive time series data is generated cannot be met. Therefore, how to store data so that the data can be quickly queried for becomes an urgent technical problem to be resolved.

In view of this, an embodiment of this application provides a data management method. A partition into which data is to be written is determined based on a field feature of the to-be-written data, so that data with specific fields having a same field feature is clustered and stored in a same CU as much as possible. Therefore, a large quantity of irrelevant CUs can be quickly filtered out during data query, to improve queryability of the stored data.

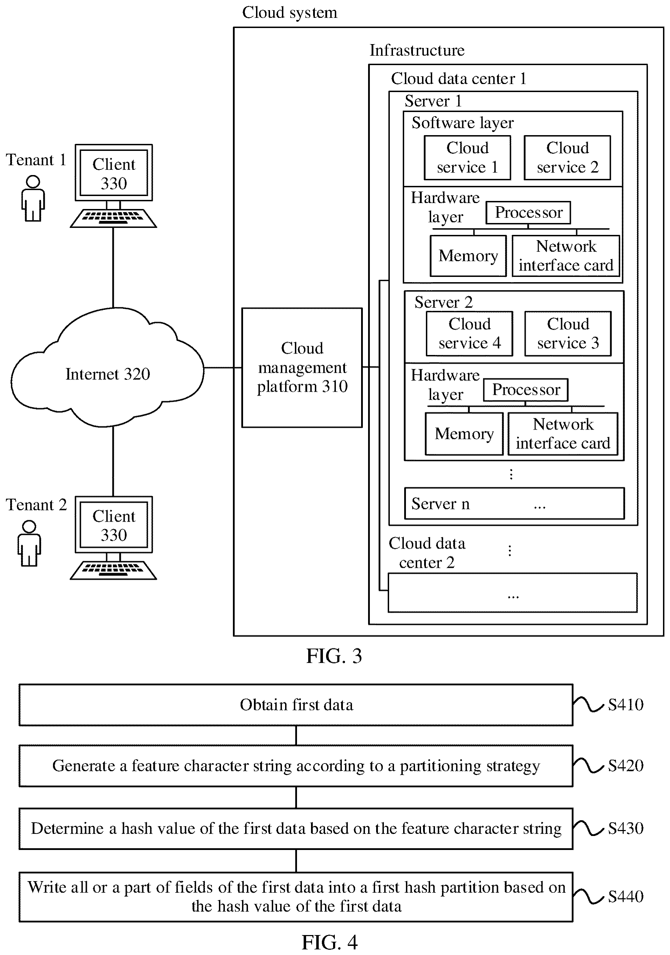

The data management method in this embodiment of this application may be applied to the field of cloud computing, for example, a scenario related to a cloud storage service like a data warehouse (data warehouse). FIG. 3 is a diagram of a cloud system used in the cloud field according to an embodiment of this application.

As shown in FIG. 3, a cloud management platform 310 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant. The cloud service may include a cloud storage service, for example, a data warehouse (data warehouse), or may include a cloud service based on a cloud storage service, for example, an online analytical processing (online analytical processing, OLAP) service or a complex event processing (complex event processing, CEP) service.

The cloud management platform 310 provides an access interface (for example, an interface or an application programming interface (application programming interface, API)). The tenant can operate a client to remotely access the access interface to register a cloud account and a password on the cloud management platform and log in to the cloud management platform. After the cloud account and the password are successfully authenticated by the cloud management platform, the tenant can further pay to select and purchase a virtual machine of a specific specification (processor, memory, or disk) on the cloud management platform. After the purchasing with payment succeeds, the cloud management platform provides a remote login account and password of the purchased virtual machine, and the client can remotely log in to the virtual machine, and use a cloud service provided by a cloud service vendor in the virtual machine.

Functions of the cloud management platform 310 include but are not limited to a user console, a computing management service, a network management service, a storage management service, an authentication service, and an image management service. A user console provides an interface or an API to interact with the tenant. The computing management service is used for managing a bare metal server and a server running a virtual machine and a container. The network management service is used for managing a network service (for example, a gateway and a firewall). The storage management service is used for managing a storage service (such as a data bucket service). The authentication service is used for managing an account and a password of a tenant. The image management service is used for managing a virtual machine image.

The tenant may log in, by using the client 330, to the cloud management platform 310 through an internet 320, to store or query for data in the cloud data center. The cloud management platform 310 may perform the data management method in this embodiment of this application.

The following describes in detail a data management method in this application with reference to FIG. 4.

FIG. 4 is a schematic block flowchart of a data management method according to an embodiment of this application. Optionally, the method in FIG. 4 may be performed by a computing device cluster, for example, the cloud management platform 310 in FIG. 3. It should be understood that this embodiment of this application is described by using only an example in which the data management method is performed in a cloud scenario, for example, a scenario in which the cloud management platform provides data partitioning and query functions for a cloud service of a data warehouse, but the method is not limited to being performed by only the cloud management platform. The data management method provided in this embodiment of this application may also be performed by another computing device, for example, a processor or a device including a processor. For brevity, the following describes some embodiments of this application by using an example in which the cloud management platform is used as an execution body. However, a person skilled in the art clearly knows that this description does not constitute a limitation on the scope of this application.

As shown in FIG. 4, the method includes the following steps.

S410: Obtain first data.

For example, in step S410, the cloud management platform may obtain the first data, where the first data is data to be written into a database. The to-be-written data may be input by a user through the cloud management platform, or may be generated by another device or service, for example, a virtual machine, a database, an internet, a message queue, or an application. This is not specifically limited in this application. By way of example but not limitation, in a data warehouse system, the to-be-written data may be collected by an agent (agent) module and pushed to the cloud management platform.

S420: Generate a feature character string according to a partitioning strategy.

For example, in step S420, the cloud management platform may generate the feature character string of the to-be-written data based on at least a part of fields of the to-be-written data. For example, the to-be-written data may include N fields, where N is a positive integer greater than 1. The partitioning strategy indicates M fields that are in the N fields of the to-be-written data and that are used to generate the feature character string and an arrangement sequence of the M fields. The selected M fields are concatenated in the sequence indicated by the partitioning strategy, to form the feature character string of the to-be-written data. A hash value of the to-be-written data may be determined by performing a hash operation on the feature character string.

S430: Determine a hash value of the first data based on the feature character string.

For example, in step S430, the cloud management platform may perform the hash operation on the feature character string of the to-be-written data generated in S420, to obtain the hash value of the to-be-written data, so as to determine a hash partition into which the to-be-written data is to be written. Specifically, there may be a mapping relationship between a hash value of data and a hash partition. By way of example but not limitation, the cloud management platform may divide a database storing the data into K hash partitions, and output values of a character string hash function may be a positive integer in a range from 1 to K, and correspond to the K hash partitions. The character string hash function is used to output the positive integer N in the range from 1 to K as a hash value based on the input feature character string, to correspond to a specific hash partition. For example, data whose hash value is N is stored in an N^{th} hash partition in the database. On a basis of a common feature of hash functions, a same output can be obtained based on a same input. Therefore, data having a same feature character string may be put into a same hash partition. An algorithm of the used character string hash function is not limited in embodiments of this application, may be, for example, a Robert Sedgewick (Robert Sedgwick, RS) algorithm, a Justin Sobel (Justin Sobel, JS) algorithm, or a Brian Kernighan & Dennis Ritchie (Brian Kernighan & Dennis Ritchie, BKDR) algorithm.

By way of example but not limitation, the character string hash function may be used to first convert an input character string into an integer number according to a uniform rule. For example, each character is converted into American standard code for information interchange (American standard code for information interchange, ASCII) corresponding to the character, and an integer number corresponding to the character string is calculated based on a location of the character in the character string. The character string hash function may be used to determine a hash table length based on a quantity of hash partitions, to determine a final output hash value. For example, it is assumed that the database is divided into 32 hash partitions. The character string hash function may use, as an output hash value, a remainder of an integer number modulo 32 that is obtained through ASCII code conversion. For example, a hash value corresponding to 11111111 is 7. The foregoing example is merely used to explain and describe a function of the hash function. An encoding scheme of the hash function and a specific clustering manner after encoding are not specifically limited in embodiments of this application.

S440: Write all or a part of the fields of the first data into a first hash partition based on the hash value of the first data.

For example, in step S440, the cloud management platform may store, based on the hash value of the to-be-written data determined in S430, the to-be-written data in the corresponding hash partition in the database. For example, positive integers of hash values 1 to K may respectively correspond to the K hash partitions included in the database. The data cloud management platform may store data whose hash value is 1 in a hash partition 1, and correspondingly, the data cloud management platform may store data whose hash value is 3 in a hash partition 3.

Optionally, data in each hash partition in the database may be stored in a column-based storage manner.

It should be understood that a partitioning mode of the hash partition is higher than that in a CU in column-based storage. Each hash partition may include at least one group of CUs, where one group of CUs is a set including at least one CU, and each CU in one group corresponds to columns of different fields of data. To be specific, data belonging to a same CU definitely belongs to a same hash partition, but data in a same hash partition may be located in different CUs. For example, each CU may store 60,000 pieces of data. For the hash partition 1, when a 60,001^{st} piece of data is put into the hash partition 1, a group of fully occupied CUs are already stored in the hash partition 1. In this case, a group of new CUs may be created in the hash partition 1 to continue to store data written into the hash partition 1. Both the new group of CUs and the fully occupied CUs belong to the hash partition 1.

According to the technical solution in this embodiment of this application, data is clustered and stored based on an eigenvalue of a field, so that data with a same feature in specific fields is stored in a same hash partition. Therefore, a large amount of data stored in a hash partition unrelated to a query condition can be quickly filtered out during data query, to improve a capability of quickly querying for the stored data.

It should be understood that, according to the data partitioning method provided in this embodiment of this application, data with a same feature field in a same access strategy can be stored in a same hash partition, but data stored in a same hash partition does not necessarily have a same feature field. In other words, when a hash partition is determined based on a feature field, because the quantity of hash partitions is limited, a same hash value may be obtained for data with different feature character strings, and therefore the data is allocated to a same hash partition. This is not limited in this application.

The purpose of clustering and storing data is to facilitate query. That is, target data is distributed in a same hash partition as much as possible based on an input field query condition. Therefore, for the foregoing step S420, in some possible implementations, the partitioning strategy is determined based on a query frequency of each field. For example, the cloud management platform may select, as the feature field for generating the feature character string, the M fields that are in all the N fields of the data and that are most frequently queried for. The field that is frequently queried for is used as a basis for hash partition division, so that data is clustered and stored based on a field with a high query probability, to increase a probability that the target data is located in a same hash partition during query.

The following describes, with reference to a specific example, the partitioning strategy determined based on the query frequency. By way of example but not limitation, the partitioning strategy may specify that all the fields of the data are sorted in descending order of query frequencies, so that the top three fields are selected and concatenated into a feature character string. It is assumed that the selected feature fields are "Device name", "Resource usage", and "Location" in sequence. A form of the finally generated feature character string is "Memory 80% Shanghai", indicating that the device is a memory, the resource usage is 80%, and the location of the device is Shanghai. Because data with a same hash value is stored in a same hash partition, if a next query condition of a user includes values of the three fields: "Device name", "Resource usage", and "Location", for example, "processors with usage of 0% in Shanghai on December 1" is queried for, target data in a query result is definitely distributed in a same hash partition. If the query condition of the user includes some feature fields, for example, "memories located in Jiangsu" is queried for, the target data may be distributed in one or more hash partitions in which "Device name" and "Location" are the same but "Resource usage" is different, and a range of a target hash partition can also be decreased to some extent. It can be learned that determining of the partitioning strategy, that is, whether selection of the feature field meets a query requirement of the user, determines effect of data clustering.

According to the technical solution in this embodiment of this application, based on query frequencies of the fields, specific fields are selected as feature fields used for hash partitioning and an arrangement sequence of the feature fields is determined, so that hash partitioning matches a range of a possible query condition as much as possible, to improve validity of data filtering based on the hash partition, and further improve the capability of quickly querying for the stored data.

For the foregoing technical solution of determining the partitioning strategy based on the query frequency of the field, query frequencies of different fields may alternatively be constantly updated and dynamically changed based on a real-time query status of data. Therefore, in some possible implementations, the cloud management platform can dynamically update the partitioning strategy based on the query frequency of the field in a period of time. Specifically, the cloud management platform may obtain a query frequency of each field of the data in a first time period, and update the partitioning strategy based on the query frequency. Optionally, the first time period may be a period of time before a moment at which the partitioning strategy is updated, for example, a field query frequency in three days before the moment at which the partitioning strategy is updated. A specific manner of determining the partitioning strategy based on the query frequency of the field may be the same as that in the foregoing solution. It should be understood that the hash partition is determined according to a new partitioning strategy for new to-be-written data obtained after the partitioning strategy is updated, but the new partitioning strategy does not affect the hash partition in which the data in the database is already stored.

According to the technical solution in this embodiment of this application, a hash partitioning strategy is adjusted based on a query frequency that is of the field and that is fed back in real time, so that the hash partitioning strategy is more time-effective, and a hash partitioning mode of newly written data can better meet a query requirement, to implement dynamic hash partitioning and further improve the capability of quickly querying for the stored data.

The data management method provided in this embodiment of this application shown in FIG. 4 may be further applied to time series data. As described above, the time series data includes a time field, a constant field, and a variable field. It can be learned based on a feature of each field of the time series data that the constant field reflects an inherent attribute of the data, and a quantity and changes of constant fields are relatively stable. Therefore, for the time series data, better effect of clustering and storage can be achieved by performing hash partitioning based on the constant field of the data.

In this case, for the foregoing step S420, in some possible implementations, the field for generating the feature character string is selected from the constant fields of the data. A constant field that does not change with time is used as a feature field used to determine a hash partition, so that data stored in a same hash partition is more likely to have a same feature field value, to improve effect of clustering and storage of time series data.

In some other embodiments, the field for generating the feature character string may also include another field. For example, hash partitioning is performed on the data based on the time field and/or the variable field of the time series data.

By way of example but not limitation, time fields in the time series data may be concatenated in descending order of units to form the feature character string. For example, four time fields: "Year", "Month", "Day", and "Time", in the time series data are sequentially concatenated to form the feature character string, and a hash value is determined by using a hash function for partitioning, so that a series of data sampled at close time can be clustered and stored.

Optionally, the foregoing example may be further used in combination with a method for performing hash partitioning based on the constant field. For example, primary partitioning may be performed based on the time fields of the time series data, and in each primary partition, secondary partitioning is performed based on constant fields of data in the partition, to implement more refined hash partitioning on the data.

Optionally, for the time series data, when the hash value of the to-be-written data is determined based on the constant field, the cloud management platform may further determine an identifier value of the to-be-written data based on the hash value of the to-be-written data. Specifically, time series data whose constant fields have different values corresponds to different identifier values. Because there may be a large quantity of repetitions in the constant fields of the time series data, a combination of values of different constant fields of each type is in a one-to-one correspondence with one identifier value. The one-to-one correspondence mapping relationship is stored in a row-based storage table, and a column of identifier values is used to replace all constant field columns in a column-based storage primary database, so that occupied storage space can be effectively reduced. In addition, because the time series data is clustered and stored based on the constant field, the identifier value further needs to reflect the hash value of the data, so that the hash partition of the data can be determined based on a value of the constant field during data query, to improve the capability of quickly querying for the data. In view of this, an embodiment of this application provides a method for allocating an identifier value based on a hash partition.

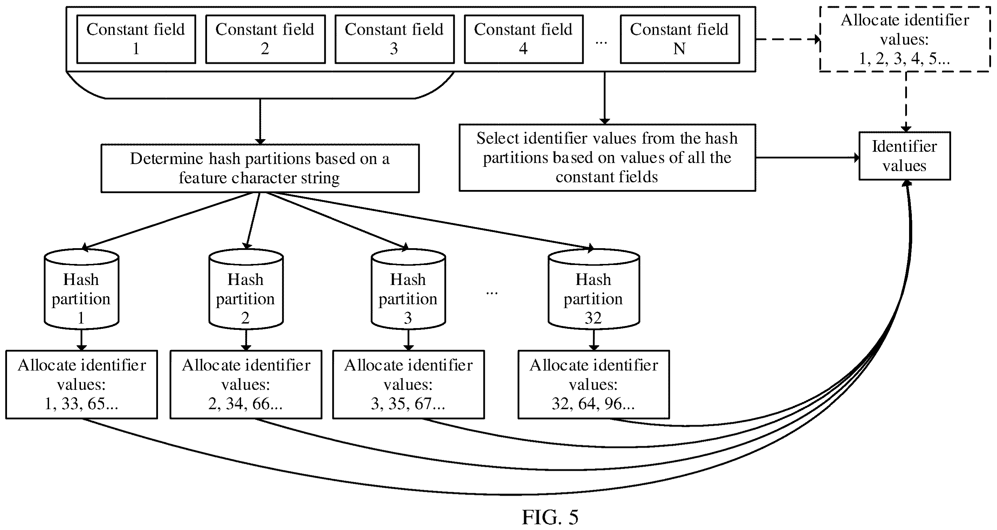

FIG. 5 is a schematic flowchart of allocation of the identifier value according to an embodiment of this application. As shown in FIG. 5, a dashed line shows a method for allocating the identifier value when hash partitioning is not considered in a conventional solution, that is, identifier values that are not used are allocated in sequence based on a combination of all constant fields. For example, for data 1 to be written into a database, assuming that an allocated identifier value is an integer ranging from 1 to 4, a cloud management platform compares all constant fields of the data 1 with constant fields of all current data in the database. If data whose constant fields are all have identical values already exists in the database, an identifier value of the existing data is used as the identifier value of the data 1. Otherwise, a new identifier value 5 is allocated to the data 1.

In the method provided in this embodiment of this application, the cloud management platform may first determine a hash partition based on a feature character string obtained by sequentially concatenating some constant fields of data, and then allocate, based on values of all constant fields, an identifier value from a hash partition to which the data belongs. A case shown in FIG. 5 is used as an example. A primary database is divided into 32 hash partitions, and an identifier value that can be allocated in each hash partition to data written into the partition is determined based on a remainder of an identifier value modulo 32. For example, if a hash value that is of a feature character string obtained by concatenating some constant fields of data 2 and that is determined by using a hash function is 2, the cloud management platform writes the data 2 into a hash partition 2. It is assumed that identifier values used by existing data in the hash partition 2 are 2 and 34 respectively. The cloud management platform compares all the constant fields of the data 2 with constant fields of other data in the current hash partition. If data whose constant fields are all have identical values already exists in the current hash partition, the identifier values of the existing data are used as identifier values of the data 2. Otherwise, a new identifier value 66 is allocated to the data 2. In the foregoing embodiment, the identifier values 2, 34, and 66 allocated in the hash partition 2 all have a remainder 2 of the modulo 32, and only data in the hash partition 2 uses an identifier value having a remainder 2 of the modulo 32. Therefore, after obtaining the identifier value of the data, the cloud management platform may determine, based on the remainder 2 of the identifier value modulo 32, that a hash value of the data is 2, so that the hash partition of the data can be reversely deduced based on the identifier value.

Further, because, as described above, there may be a large amount of repeated data in constant fields, in some possible implementations, the cloud management platform can store a mapping relationship between identifier values and constant fields of data in a constant data table. For ease of querying the correspondence between identifier values and constant fields, optionally, the constant data table may be a row-based storage data table. Constant fields with relatively high repetition degrees and corresponding identifier values are stored as an auxiliary table, so that a value of a constant field can be filtered during data query, to improve data query efficiency.

Optionally, after constant fields of the data are mapped to identifier values that can be in a one-to-one correspondence, the cloud management platform may write only a time field, a variable field, and the identifier value of the data into the primary database. The primary database may be a column-based storage part including a hash partition and a CU in the hash partition, and the primary database and the row-based storage constant data table jointly form a database of a hybrid row-column storage structure. On a basis of storing the constant fields with the relatively high repetition degrees and the corresponding hash values and identifier values as an auxiliary table, identifier values of integer numbers are stored in the primary database storing data, to replace a large quantity of repeated constant fields, so as to reduce space required for storing data.

Further, different identifier values are allocated to data in different hash partitions, so that a hash partition to which data belongs can be reversely determined based on an identifier value of the data. Therefore, only the constant field and the corresponding identifier value need to be stored in the auxiliary table, and a hash value corresponding to the constant field does not need to be separately recorded. This further reduces space required for storing data and improves query efficiency. In this implementation, it is further possible that only a constant field of existing data in a hash partition to which the data belongs needs to be considered when an identifier value is allocated to the data, and it is not necessary to compare the constant field with constant fields of all data in the database. This improves a speed of allocating the identifier value to the data and improves data storage efficiency.

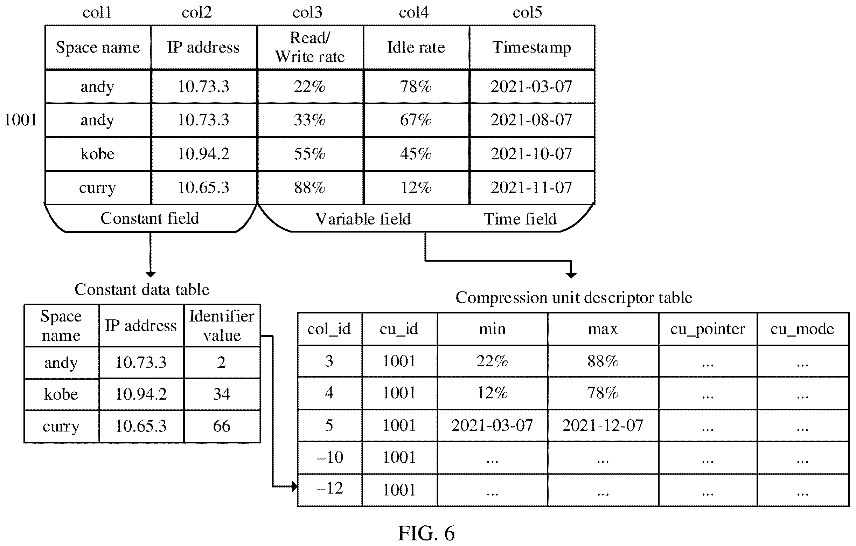

FIG. 6 is a diagram of the hybrid row-column storage structure according to an embodiment of this application. As shown in FIG. 6, constant fields corresponding to a coll column and a col2 column are stored in a constant data table of row-based storage, and a combination that appears more than once (a combination whose space name is andy and whose IP address is 10.73.3) is removed, so that an identifier value in a one-to-one correspondence is allocated to a combination of different constant fields of each type. A CUDesc table can be used to describe a column-based storage primary database. Variable fields corresponding to col3 and col4 and a time field corresponding to col5 are normally stored in the primary database. Each column corresponds to one CU whose cu_id is 1001. In addition, a new column of CUs for storing identifier values of data is added to the primary database, and a fixed column number (for example, -12 in FIG. 6) that is easy to distinguish may be defined for the column. Optionally, a column of CUs may be further added to the primary database to store hash values of data (for example, a column whose col_id is -10 in FIG. 6). A storage amount of data is slightly increased, so that a hash partition to which data in the group of CUs belongs can be more intuitively reflected, and a computation amount for determining the hash partition based on an identifier value during data retrieval is reduced. Through hybrid row-column storage, repeated storage of constant fields is avoided during storage, to reduce a data storage scale. In addition, during data query, the constant fields in the primary database are converted into integers for comparison, to improve data query performance.

The foregoing describes a data storage method in the data management method according to an embodiment of this application with reference to FIG. 4 to FIG. 6. In some possible implementations, the data management method according to an embodiment of this application further includes a data query method.

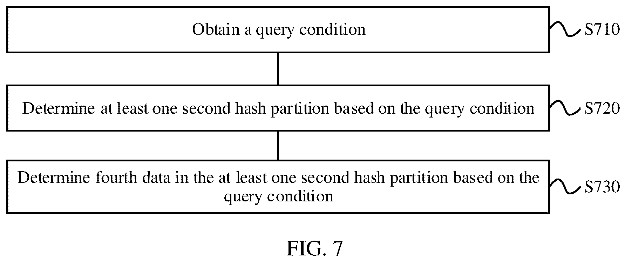

The following describes in detail a data query method in this application with reference to FIG. 7.

FIG. 7 is a schematic block flowchart of a data management method according to an embodiment of this application. Optionally, the method in FIG. 4 may be performed by a computing device cluster, for example, the cloud management platform 310 in FIG. 3. It should be understood that this embodiment of this application is described by using only an example in which the data management method is performed in a cloud scenario, but the method is not limited to being performed by only a cloud management platform. The data management method provided in this embodiment of this application may also be performed by another computing device, for example, a processor or a device including a processor. For brevity, the following describes some embodiments of this application by using an example in which the cloud management platform is used as an execution body. However, a person skilled in the art clearly knows that this description does not constitute a limitation on the scope of this application.

Optionally, the data query method in FIG. 7 may be combined with the data storage method shown in FIG. 3. For example, the method in the following embodiment may be performed after the foregoing data management method.

As shown in FIG. 7, the method includes the following steps.

S710: Obtain a query condition.

For example, in step S710, the cloud management platform may obtain the query condition for data in a database. Specifically, the query condition may be used to query for fourth data in the database. The fourth data may be data that meets the query condition in the database, and the fourth data may also be referred to as target data.

Optionally, the query condition may include a filter condition and a query target. The filter condition is used to limit a condition that needs to be met by values of at least a part of fields in the target data. The field limited by the filter condition may be referred to as a filter column. For example, afield limited by a WHERE clause in a structured query language (structured query language, SQL) sentence is the filter condition. The query target is used to limit a field that is queried for in the target data, that is, a field that is finally output in a query result. The field corresponding to the query target may be referred to as a target column. It should be understood that the filter column and the target column may overlap, that is, a field of the data may be both the filter column and the target column, or certainly may be either or neither of the filter column and the target column.

S720: Determine at least one second hash partition based on the query condition.

For example, in step S720, the cloud management platform may first determine, based on the query condition, a hash partition to which the target data belongs. The second hash partition may be one or more hash partitions that are in all hash partitions in the database and that may store the target data. For example, the cloud management platform may determine a hash value or an identifier value of the target data based on the query condition, to filter the hash partition in which the target data may be stored.

S730: Determine the fourth data in the at least one second hash partition based on the query condition.

For example, in step S730, the cloud management platform may query, based on the query condition, for the target data in the hash partition range determined in S720.

According to the technical solution in this embodiment of this application, a hash partition to which a CU in column-based storage belongs can be directly determined based on a CUDesc table, and specific data in the CU does not need to be decompressed and read. Therefore, the hash partition in which the target data may be stored is filtered based on the query condition, so that a large quantity of hash partitions that do not meet the query condition and in which data is clustered and stored can be removed through pruning, to reduce an amount of to-be-queried data that needs to be read, and improve data query efficiency.

The method shown in FIG. 7 may also be applied to time series data. In this case, for step S720, in some possible implementations, the hash partition of the target data may be determined by querying a constant data table. Specifically, for the time series data, the filter condition of the query condition may be further classified, based on different defined fields, into a constant filter condition, a variable filter condition, and a time filter condition, which are respectively used to define conditions that need to be met by a value of a part of or values of all fields in corresponding fields of the target data. For example, the constant filter condition may be used to define a condition that needs to be met by values of all or a value of a part of constant fields of the target data. The cloud management platform can query the constant data table based on the constant filter condition, to determine an identifier value of data whose constant field meets the query condition, and may determine a corresponding hash value based on the identifier value, namely, the hash partition to which the target data may belong.

According to the technical solution in this embodiment of this application, a value range of a constant field is first filtered in an auxiliary table in which a mapping relationship between a constant field and an identifier value is stored, then a hash partition is filtered, based on a corresponding identifier value, in a primary database storing data, and the filter condition for the constant field is changed to a filter condition for the identifier value by using the simpler constant data table, so that time required for retrieving data with a large amount of repeated constant fields in the primary database can be reduced, to improve data query efficiency.

For the time series data, in step S720, in some possible implementations, querying for the target data in the second hash partition may include: filtering data in the second hash partition based on one or more of the identifier value of the target data, the variable filter condition, or the time filter condition. In this way, row-level filtering of data in the hash partition is implemented in different dimensions.

Correspondingly, for the time series data, after the target data is determined through querying, the cloud management platform can read a constant field of constant data from the constant data table. A value of the constant field is read, based on the identifier value, from the auxiliary table that has a smaller data amount and that is easier to read, so that reading efficiency of the target data can be improved, and read/write performance resources of a data storage system can be saved.

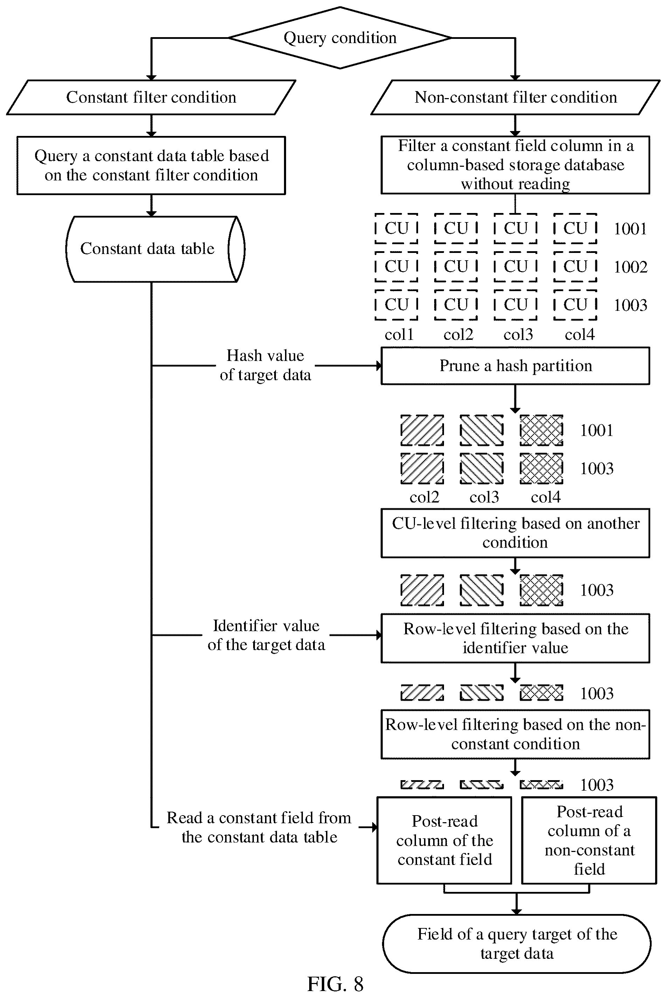

FIG. 8 is a schematic flowchart of querying for the target data in the hybrid row-column storage database. As shown in FIG. 8, query conditions are classified into two types: a constant filter condition and a non-constant filter condition, which are respectively used to filter a constant data table of row-based storage and a column-based storage primary database. The non-constant filter condition may be a general term of filter conditions, such as a variable filter condition and a time filter condition, other than the constant filter condition. The cloud management platform can determine the identifier value of the target data by querying the constant data table based on the constant filter condition, to determine the hash value of the target data, and cache the identifier value and the hash value in a memory.

In addition, the cloud management platform first filters a constant field column in the column-based storage primary database. Even if the constant field column is stored in the primary database, the cloud management platform does not decompress and read CUs corresponding to constant fields, for example, CUs in a coll column in the case shown in FIG. 8. Then, based on the cached hash value, the cloud management platform filters out, by using the CUDesc table, a CU that does not match a hash partition, for example, CUs in an interval 1002 in the case shown in FIG. 8, to implement CU-level hash partition pruning. Optionally, the cloud management platform may further perform CU-level filtering based on another condition, for example, remove, based on maximum value and/or minimum value information of data in CUs recorded in the CUDesc table, a CU whose data range is not within a range of the filter condition and another CU in a corresponding row.

Further, the cloud management platform may read a CU that is in remaining CUs and that stores an identifier value, perform row-level filtering based on the cached identifier value, and remove data whose identifier value does not meet the condition and data in a same row in other CUs. If specific target data cannot be determined based on the identifier value, the cloud management platform may further read a CU that is in the remaining CUs and that is related to the non-constant condition, perform row-level filtering based on the non-constant condition, and remove data that does not meet the condition and data in a same row in other CUs from remaining candidate data. Remaining data after final filtering is the target data that is queried for.

After determining the target data, the cloud management platform further needs to read a field of the query target of the target data, namely, a target column of the target data. A target column that has been included in a filter column may be directly read because a corresponding CU has been decompressed and read. For a target column that is not included in the filter column, a location at which the data is stored needs to be accessed in this case. This process is referred to as a post-reading process, and a corresponding column is referred to as a post-read column. A post-read column of a non-constant field may be read by accessing and decompressing a CU at a corresponding location in the primary database. A post-read column of a constant field may be determined by reversely querying a constant data table based on a cached identifier value, so that the CU of the constant field does not need to be accessed and decompressed. This reduces usage of system read and write resources and save decompression time of the CU.

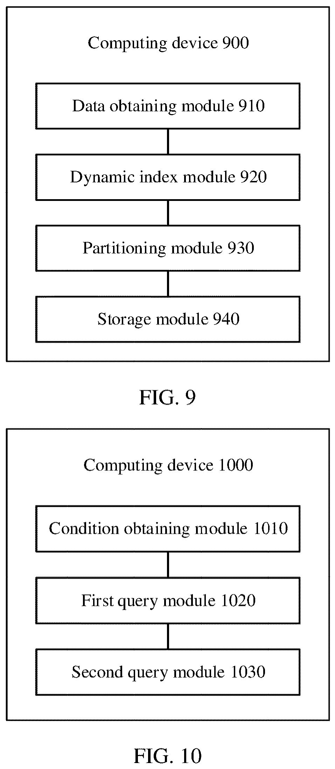

The foregoing describes, with reference to FIG. 4 to FIG. 8, the embodiments of the data management method according to this application. The following describes, with reference to FIG. 9 to FIG. 13, embodiments of a computing device for data management according to this application.

FIG. 9 is a block diagram of a structure of a computing device 900 for data management according to an embodiment of this application.

As shown in FIG. 9, the computing device 900 includes a data obtaining module 910, a dynamic index module 920, a partitioning module 930, and a storage module 940.

Specifically, the data obtaining module 910 is configured to obtain first data, where the first data includes N fields, and N is a positive integer greater than 1.

Specifically, the dynamic index module 920 is configured to generate a feature character string according to a partitioning strategy, where the partitioning strategy indicates M fields used to generate the feature character string in the N fields and an arrangement sequence of the M fields, and M is a positive integer less than N;

Optionally, the M fields and the arrangement sequence of the M fields are determined based on query frequencies of the N fields.

Optionally, the dynamic index module 920 is further configured to: obtain query frequencies of the N fields in a target time period; and update the partitioning strategy based on the query frequencies of the N fields in the target time period.

Optionally, for time series data, the M fields may be determined from constant fields.

Specifically, the partitioning module 930 is configured to determine a hash value of the first data based on the feature character string.

Specifically, the storage module 940 is configured to write all or a part of the fields of the first data into a first hash partition of a database based on the hash value of the first data, where the database includes a plurality of hash partitions.

Optionally, the storage module 940 is further configured to: determine an identifier value of the first data based on all constant fields of the first data, where the identifier value of the first data is different from an identifier value of second data, the second data is data stored in the database, and a value of a constant field of the second data is different from a value of a constant field of the first data; and store a mapping relationship between the identifier value of the first data and all the constant fields of the first data in a constant data table.

Optionally, the storage module 940 is specifically configured to determine the identifier value of the first data based on all the constant fields of the first data and the hash value of the first data, where the identifier value of the first data is different from an identifier value of third data, a hash value of the third data is different from the hash value of the first data, and the hash value of the first data can be determined based on the identifier value of the first data.

Optionally, the storage module 940 is further configured to: write at least one time field and at least one variable field of the first data into the first hash partition; and write the identifier value of the first data into the first hash partition.

FIG. 10 is a block diagram of a structure of another computing device 1000 for data management according to an embodiment of this application. Optionally, the computing device 1000 may be combined with the foregoing computing device 900, that is, the computing device 1000 may further include a part of or all modules in the computing device 900.

As shown in FIG. 10, the computing device 1000 includes a condition obtaining module 1010, a first query module 1020, and a second query module 1030.

Specifically, the condition obtaining module 1010 is configured to obtain a query condition, where the query condition is used to query for fourth data in a database.

Specifically, the first query module 1020 is configured to determine at least one second hash partition based on the query condition, where the at least one second hash partition is a hash partition in which the fourth data is possibly stored.

Optionally, the first query module 1020 is specifically configured to: query a constant data table based on a constant filter condition, to determine an identifier value of the fourth data; and determine a hash value of the fourth data based on the identifier value of the fourth data.

Specifically, the second query module 1030 is configured to determine the fourth data in the at least one second hash partition based on the query condition.

Optionally, the second query module 1030 is specifically configured to determine the fourth data in the at least one second hash partition based on the identifier value of the fourth data.

Optionally, the second query module 1030 is specifically configured to: determine at least one piece of candidate data in the at least one second hash partition based on the identifier value of the fourth data; and determine the fourth data from the at least one piece of candidate data based on a variable filter condition and/or a time filter condition.

Optionally, the second query module 1030 is further configured to read a post-read constant field of the fourth data from the constant data table based on the identifier value of the fourth data, where the post-read constant field is a constant field that is not included in the query condition.

The foregoing modules may be implemented by using software, or may be implemented by using hardware. For example, the following uses the dynamic index module 920 as an example to describe an implementation of the dynamic index module 920. Similarly, for implementations of the data obtaining module 910, the partitioning module 930, the storage module 940, the condition obtaining module 1010, the first query module 1020, and the second query module 1030, refer to the implementation of the dynamic index module 920.

A module is used as an example of a software functional unit. The dynamic index module 920 may include code run on a compute instance. The computing instance may include at least one of a physical host (a computing device), a virtual machine, and a container. Further, there may be one or more computing instances. For example, the dynamic index module 920 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit. The dynamic index module 920 may include at least one computing device, for example, a server. Alternatively, the dynamic index module 920 may be a device implemented by using an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field-programmable gate array, FPGA), generic array logic (generic array logic, GAL), or any combination thereof.

The plurality of computing devices included in the dynamic index module 920 may be distributed in a same region, or may be distributed in different regions. The plurality of computing devices included in the dynamic index module 920 may be distributed in a same AZ, or may be distributed in different AZs. Similarly, the plurality of computing devices included in the dynamic index module 920 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in other embodiments, the data obtaining module 910, the dynamic index module 920, the partitioning module 930, and the storage module 940, and the condition obtaining module 1010, the first query module 1020, and the second query module 1030 may be separately configured to perform any step in the foregoing data management method. The steps implemented by the data obtaining module 910, the dynamic index module 920, the partitioning module 930, the storage module 940, the condition obtaining module 1010, the first query module 1020, and the second query module 1030 may be specified as required. The data obtaining module 910, the dynamic index module 920, the partitioning module 930, the storage module 940, the condition obtaining module 1010, the first query module 1020, and the second query module 1030 respectively implement different steps in the foregoing data management method, to implement all functions of the computing device for data management.

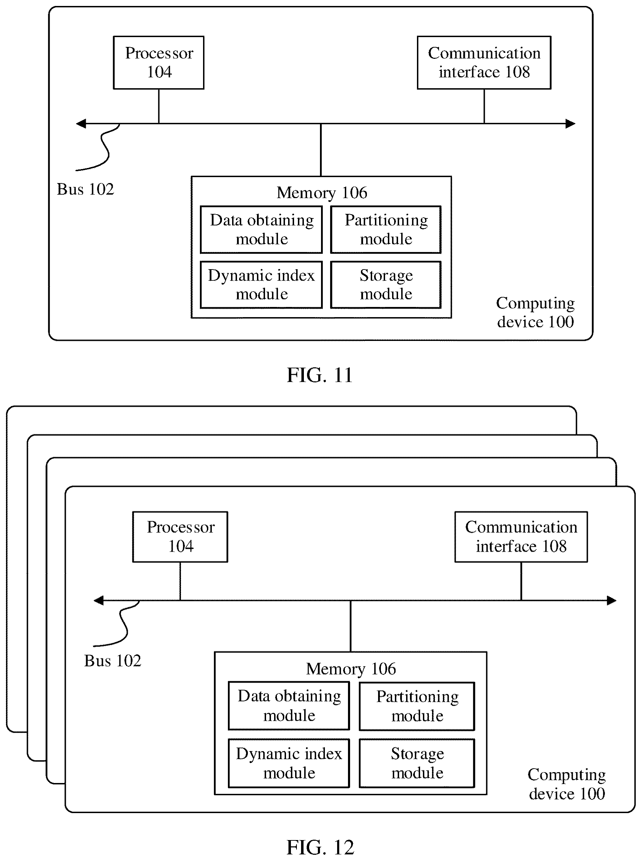

This application further provides a computing device 100. As shown in FIG. 11, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10. However, it does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the data obtaining module, the dynamic index module, the partitioning module, and the storage module, to implement the data management method. That is, the memory 106 stores instructions for performing the data management method.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 12, the computing device cluster includes at least one computing device 100. Memories 106 in one or more computing devices 100 in the computing device cluster may store same instructions for performing the data management method.

In some possible implementations, the memories 106 in the one or more computing devices 100 in the computing device cluster may alternatively store some instructions for performing the data management method. In other words, a combination of one or more computing devices 100 may jointly execute instructions for performing the data management method.

It should be noted that the memories 106 in different computing devices 100 in the computing device cluster may store different instructions, and different instructions are separately used to perform some functions of the computing device for data management. In other words, the instructions stored in the memory 106 in different computing devices 100 may implement functions of one or more of the data obtaining module, the dynamic index module, the partitioning module, and the storage module.

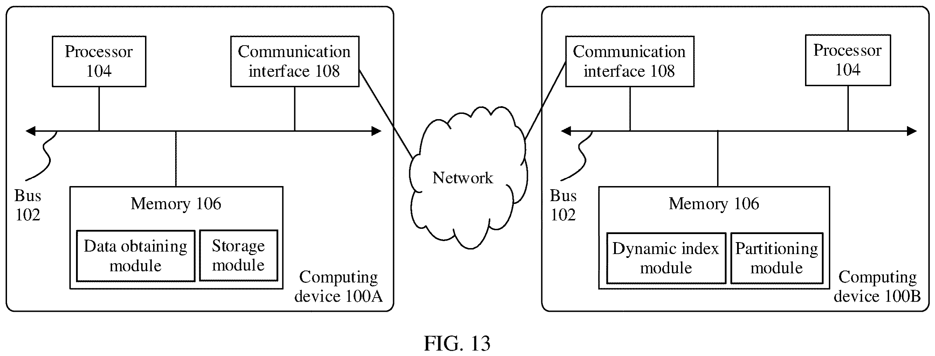

In some possible implementations, the one or more computing devices in the computing device cluster may be connected through a network. The network may be a wide area network, a local area network, or the like. FIG. 13 shows a possible implementation. As shown in FIG. 13, two computing devices 100A and 100B are connected through a network. Specifically, each computing device is connected to the network through a communication interface in the computing device. In this possible implementation, a memory 106 in the computing device 100A stores instructions for performing functions of the data obtaining module and the storage module. In addition, a memory 106 in the computing device 100B stores instructions for performing functions of the dynamic index module and the partitioning module.

It should be understood that functions of the computing device 100A shown in FIG. 12 may alternatively be completed by the plurality of computing devices 100. Similarly, functions of the computing device 100B may alternatively be completed by a plurality of computing devices 100.

An embodiment of this application further provides a chip. The chip includes a processor and a data interface. The processor reads, through the data interface, instructions stored in a memory, to perform the data management method.

An embodiment of this application further provides a computer program product including instructions. The computer program product may be software or a program product that includes the instructions and that can be run on a computing device or stored in any usable medium. When the computer program product is run on at least one computing device, the at least one computing device is enabled to perform the data management method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing management technical features that may be randomly combined. For brevity of description, all possible combinations of the technical features in the foregoing embodiments are not described. However, a combination of these technical features should be considered within the scope of this specification provided that there is no shield.

The foregoing embodiments are merely intended to describe the technical solutions of this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A data management method, comprising:
Obtaining first data, wherein the first data comprises N fields, and N is a positive integer greater than 1;
Generating a feature character string according to a partitioning strategy, wherein the partitioning strategy indicates M fields used to generate the feature character string in the N fields and an arrangement sequence of the M fields, and M is a positive integer less than N;
Determining a hash value of the first data based on the feature character string; and
Writing all or a part of the fields of the first data into a first hash partition of a database based on the hash value of the first data, wherein the database comprises a plurality of hash partitions, different hash partitions correspond to different hash values, and the first hash partition is a hash partition corresponding to the hash value of the first data.

2. The method according to claim 1, wherein the M fields and the arrangement sequence of the M fields are determined based on query frequencies of the N fields.

3. The method according to claim 2, wherein the method further comprises:
obtaining query frequencies of the N fields in a target time period; and
updating the partitioning strategy based on the query frequencies of the N fields in the target time period.

4. The method according to any one of claims 1 to 3, wherein the N fields comprise at least one time field, at least one constant field, and at least one variable field, and the M fields are all or a part of the at least one constant field.

5. The method according to claim 4, wherein the database further comprises a constant data table, and the method further comprises:
determining an identifier value of the first data based on all constant fields of the first data, wherein the identifier value of the first data is different from an identifier value of second data, the second data is data stored in the database, and a value of a constant field of the second data is different from a value of a constant field of the first data; and
storing a mapping relationship between the identifier value of the first data and all the constant fields of the first data in the constant data table.

6. The method according to claim 5, wherein the determining the identifier value of the first data based on all the constant fields of the first data comprises:
determining the identifier value of the first data based on all the constant fields of the first data and the hash value of the first data, wherein the identifier value of the first data is different from an identifier value of third data, a hash value of the third data is different from the hash value of the first data, and the hash value of the first data is capable of being determined based on the identifier value of the first data.

7. The method according to claim 6, wherein the writing all or the part of the fields of the first data into the first hash partition of the database comprises:
writing the at least one time field and the at least one variable field of the first data into the first hash partition; and
the method further comprises:
writing the identifier value of the first data into the first hash partition.

8. The method according to claim 7, wherein the method further comprises:
obtaining a query condition, wherein the query condition is used to query for fourth data in the database;
determining at least one second hash partition based on the query condition, wherein the at least one second hash partition is a hash partition in which the fourth data is possibly stored; and
determining the fourth data in the at least one second hash partition based on the query condition.

9. The method according to claim 8, wherein the query condition comprises values of all or a value of a part of constant fields of the fourth data, and the determining the at least one second hash partition based on the query condition comprises:
querying the constant data table based on the values of all or the value of the part of the constant fields of the fourth data, to determine an identifier value of the fourth data; and
determining a hash value of the fourth data based on the identifier value of the fourth data.

10. The method according to claim 9, wherein the determining the fourth data in the at least one second hash partition based on the query condition comprises:
determining the fourth data in the at least one second hash partition based on the identifier value of the fourth data.

11. The method according to claim 10, wherein the query condition further comprises a value of a variable field of the fourth data and/or a value of a time field of the fourth data, and the determining the fourth data in the at least one second hash partition based on the identifier value of the fourth data comprises:
determining at least one piece of candidate data in the at least one second hash partition based on the identifier value of the fourth data; and
determining the fourth data from the at least one piece of candidate data based on the value of the variable field of the fourth data and/or the value of the variable field of the fourth data.

12. The method according to any one of claims 9 to 11, wherein when the query condition comprises the value of the part of the constant fields of the fourth data, the method further comprises:
reading a post-read constant field of the fourth data from the constant data table based on the identifier value of the fourth data, wherein the post-read constant field is a constant field that is not comprised in the query condition.

13. A computing device, comprising:
a data obtaining module, configured to obtain first data, wherein the first data comprises N fields, and N is a positive integer greater than 1;
a dynamic index module, configured to generate a feature character string according to a partitioning strategy, wherein the partitioning strategy indicates M fields used to generate the feature character string in the N fields and an arrangement sequence of the M fields, and M is a positive integer less than N;
a partitioning module, configured to determine a hash value of the first data based on the feature character string; and
a storage module, configured to write all or a part of the fields of the first data into a first hash partition of a database based on the hash value of the first data, wherein the database comprises a plurality of hash partitions, different hash partitions correspond to different hash values, and the first hash partition is a hash partition corresponding to the hash value of the first data.

14. The computing device according to claim 13, wherein the M fields and the arrangement sequence of the M fields are determined based on query frequencies of the N fields.

15. The computing device according to claim 14, wherein the dynamic index module is further configured to:
obtain query frequencies of the N fields in a target time period; and
update the partitioning strategy based on the query frequencies of the N fields in the target time period.

16. The computing device according to any one of claims 13 to 15, wherein the N fields comprise at least one time field, at least one constant field, and at least one variable field, and the M fields are all or a part of the at least one constant field.

17. The computing device according to claim 16, wherein the database further comprises a constant data table, and the storage module is further configured to:
determine an identifier value of the first data based on all constant fields of the first data, wherein the identifier value of the first data is different from an identifier value of second data, the second data is data stored in the database, and a value of a constant field of the second data is different from a value of a constant field of the first data; and
store a mapping relationship between the identifier value of the first data and all the constant fields of the first data in the constant data table.

18. The computing device according to claim 17, wherein the storage module is configured to:
determine the identifier value of the first data based on all the constant fields of the first data and the hash value of the first data, wherein the identifier value of the first data is different from an identifier value of third data, a hash value of the third data is different from the hash value of the first data, and the hash value of the first data is capable of being determined based on the identifier value of the first data.

19. The computing device according to claim 18, wherein the storage module is configured to:
write the at least one time field and the at least one variable field of the first data into the first hash partition; and
write the identifier value of the first data into the first hash partition.

20. The computing device according to claim 19, wherein the computing device further comprises:
a condition obtaining module, configured to obtain a query condition, wherein the query condition is used to query for fourth data in the database;
a first query module, configured to determine at least one second hash partition based on the query condition, wherein the at least one second hash partition is a hash partition in which the fourth data is possibly stored; and
a second query module, configured to determine the fourth data in the at least one second hash partition based on the query condition.

21. The computing device according to claim 20, wherein the query condition comprises values of all or a value of a part of constant fields of the fourth data, and the first query module is configured to:
query the constant data table based on the values of all or the value of the part of the constant fields of the fourth data, to determine an identifier value of the fourth data; and
determine a hash value of the fourth data based on the identifier value of the fourth data.

22. The computing device according to claim 21, wherein the second query module is configured to:
determine the fourth data in the at least one second hash partition based on the identifier value of the fourth data.

23. The computing device according to claim 22, wherein the query condition further comprises a value of a variable field of the fourth data and/or a value of a time field of the fourth data, and the second query module is configured to:
determine at least one piece of candidate data in the at least one second hash partition based on the identifier value of the fourth data; and
determine the fourth data from the at least one piece of candidate data based on the value of the variable field of the fourth data and/or the value of the variable field of the fourth data.

24. The computing device according to any one of claims 21 to 23, wherein when the query condition comprises the value of the part of the constant fields of the fourth data, the second query module is further configured to:
read a post-read constant field of the fourth data from the constant data table based on the identifier value of the fourth data, wherein the post-read constant field is a constant field that is not comprised in the query condition.

25. A computing device, comprising a processor and a memory, wherein the processor is configured to execute instructions stored in the memory, to enable the computing device to perform the method according to any one of claims 1 to 12.

26. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 12.

27. A computer-readable storage medium, comprising computer program instructions, wherein when the computer instructions are executed by a computing device cluster, the computing device cluster is enabled to perform the method according to any one of claims 1 to 12.
